# EUROPÄISCHE PATENTSCHRIFT

(11) **EP 0 803 440 B1**
(45) Veröffentlichungstag und Bekanntmachung des Hinweises auf die Patenterteilung: **09.12.1998**
(21) Anmeldenummer: 97104957.2
(22) Anmeldetag: 24.03.1997
(51) Int. Cl.: B65B 57/10

(54) **Verfahren und Vorrichtung zum Nachfüllen von Füllgut in Näpfe einer Folienbahn**
Method and apparatus for filling packets of a foil with products
Procédé et dispositif pour remplir des alvéoles d'un film avec des produits

(30) Priorität: 27.04.1996 DE 19617014
(43) Veröffentlichungstag der Anmeldung: 29.10.1997
(73) Patentinhaber: UHLMANN PAC-SYSTEME GmbH & Co. KG, 88471 Laupheim (DE)
(72) Erfinder: Eck, Werner, Dr.-Ing., 88471 Laupheim (DE); Gertitschke, Detlev, Dipl.-Ing., 88471 Leupheim (DE); Mertens, Richard, Dipl.-Ing., 88471 Laupheim (DE); Bochtler, Günther, 88487 Mietingen (DE); Kopf, Reinhold, 88433 Schemmerberg (DE); Weiss, Andreas, 88400 Biberach (DE); Arb, Rudolf, 88471 Laupheim (DE)
(74) Vertreter: Dziewior, Joachim, Dipl.-Phys. Dr.

(56) Entgegenhaltungen:
- EP-A- 0 388 361
- FR-A- 2 709 472

## Beschreibung

Die Erfindung betrifft ein Verfahren zum Nachfüllen von Füllgut, wie Tabletten, Dragees, Kapseln oder dergl., in mittels einer Thermoformmaschine in einer Folienbahn erzeugte Näpfe, die in der Füllstation der Thermoformmaschine nicht korrekt gefüllt worden sind.

Die Erfindung betrifft auch eine Vorrichtung zur Ausführung dieses Verfahrens.

Thermoformmaschinen dienen zum Abpacken von Füllgut, das üblicherweise in fest vorgegebener Raumform vorliegt, in sogenannte Blisterpackungen. Eine typische Thermoformmaschine umfaßt eine Vorratsrolle, von der die Folienbahn abgewickelt wird, die in einer Heizstation aufgeheizt und in einer nachfolgenden Formstation mit den Näpfen versehen wird. Diese bilden ein periodisches Muster. Mehrere Näpfe werden üblicherweise zu einem Formatbereich zusammengefaßt, der die Näpfe umfaßt, die jeweils gemeinsam einem Verarbeitungsschritt unterzogen werden.

Nach Ausformung der Näpfe und der daran anschließenden Abkühlung werden diese in der Füllstation befüllt und mit der Deckfolie versiegelt. Damit bei einer Störung des Füllvorganges nicht unvollständige Blisterpackungen abgepackt und letztendlich an den Kunden ausgeliefert werden, wird bei den Thermoformmaschinen der Füllvorgang kontrolliert. Wird bei der Kontrolle ein nicht korrekt gefüllter Napf registriert, so ist es zum einen bekannt, die Blisterpackungen auszusortieren, in denen sich der eine nicht befüllte Napf befindet. Das in korrekt gefüllten Näpfen befindliche Füllgut wird dabei mit aussortiert, so daß ein einziger nicht korrekt befüllter Napf bedeutet, daß der Inhalt einer Vielzahl anderer Näpfe Ausschuß ist. Dies ist insbesondere dann ärgerlich, wenn der Inhalt der Näpfe relativ kostspielig ist, wie es bei bestimmten pharmazeutischen Präparaten der Fall sein kann. Problematisch ist es auch, wenn das in den ausgesonderten Blisterpackungen enthaltene Füllgut unter dem Aspekt des Umweltschutzes nicht ohne weiteres entsorgt werden kann. Deshalb wird zum anderen teilweise auch versucht, bei Registrierung eines nicht korrekt gefüllten Napfes das Füllgut aus den benachbarten, zu einem Formatbereich gehörenden Näpfen abzusaugen und den Füllvorgang zu wiederholen. Eine solche, dem Oberbegriff des Anspruchs 6 entsprechende Vorrichtung ist z.B. bekannt aus der FR 2 709 472 A. Aber auch der zweite Füllversuch des Formatbereiches ist nicht mit einer größeren Zuverlässigkeit auszuführen als zuvor, so daß erneut Fehler auftreten können. Es ist daher Ziel der Erfindung, ein Verfahren der eingangs genannten Art so auszubilden, daß die Anzahl nicht korrekt gefüllter Näpfe der Folienbahn vor deren Versiegeln mit der Deckfolie deutlich verringert werden kann. Es ist gleichfalls Ziel der Erfindung, eine Vorrichtung bereitzustellen, mit der ein solches Verfahren ausgeführt werden kann.

Diese Aufgabe wird für den das Verfahren betreffenden Teil durch ein Verfahren gemäß Anspruch 1 gelöst.

Dieses Verfahren bietet den Vorteil, daß nicht nur registriert wird, daß ein Napf nicht korrekt gefüllt ist, sondern daß auch dessen Lage in der Folienbahn innerhalb eines Formatbereiches ermittelt wird, so daß nicht für eine Vielzahl von Näpfen der Füllvorgang wiederholt werden muß, nachdem zuvor korrekt gefüllte Näpfe wieder von dem Füllgut befreit worden sind, sondern daß gezielt nur ein einziger Napf angesteuert und mit dem Füllgut versehen werden kann. Da damit eine deutliche Reduzierung der Anzahl der Näpfe verbunden ist, die erst nach dem eigentlichen Füllvorgang in der Füllstation befüllt werden, reduziert sich damit auch deutlich das Risiko, daß bei dem zweiten Füllversuch eine Störung auftritt.

Im Stand der Technik sind vielerlei Arten bekannt, wie der Füllstatus der Näpfe kontrolliert werden kann. So wurde schon vorgeschlagen, durch Stößel die Gegenwart des Füllguts in den Näpfen auszutesten, den Formatbereich der Folienbahn auszuwiegen, sowie elektromagnetische Strahlung verschiedenster Wellenlängenbereiche einzusetzen, um das Fehlen bzw. das Vorhandensein von Füllgut in den Näpfen festzustellen. Im Rahmen der Erfindung ist es vorgesehen, daß mit einer optischen Füllkontrolle der Füllstatus der Näpfe kontrolliert und die Lage des registrierten Napfes erfaßt wird, und daß das Signal der optischen Füllkontrolle an die Nachfülleinheit übermittelt wird. Dies bietet neben der Berührungslosigkeit der Kontrolle den Vorteil, daß auf einfache Weise ein räumlich aufgelöstes Signal erzeugt wird, das mit bewährten Methoden weiterverarbeitet werden kann.

Thermoformmaschinen werden in einer Weise betrieben, bei der die Folienbahn entweder kontinuierlich oder getaktes weiterbewegt wird. Bei kontinuierlich betriebenen Thermoformmaschinen ist es am einfachsten, wenn der Füllkopf in seiner Position oberhalb des registrierten Napfes zum Befüllen synchron mit der Folienbahn bewegt wird. Auf diese Weise steht ein ausreichendes Zeitintervall zur Verfügung, um das Füllgut mit der benötigten Zuverlässigkeit in dem zuvor registrierten Napf ablegen zu können. Diese Verfahrensweise bietet aber auch bei taktweise betriebenen Thermoformmaschinen Vorteile, da auch während des Vorschubs der Folienbahn die Näpfe befüllt werden können, die sich in Reichweite des Auslegers befinden. Dies gilt sowohl für den Takt, in dem der Formatbereich in die Nachfülleinheit eintransportiert wird, als auch bei dem Takt, in dem er diese wieder verläßt.

Bei einer derartig betriebenen Thermoformmaschine steht dann zusätzlich zum Nachfüllen die Zeit zur Verfügung, in der die Folienbahn ruht, wenn die Thermoformmaschine den Verfahrensschritt ausführen kann, in dem der Füllkopf nach Erreichen seiner Position oberhalb des registrierten Napfes zum Befüllen stationär über der ruhenden Folienbahn verharrt.

Im Sinne einer deutlich reduzierten Fehlerquote ist es vorteilhaft und daher bevorzugt, wenn nach der Nachfülleinheit erneut der Füllstatus des in der Füllstation nicht korrekt gefüllten Napfes kontrolliert wird.

Der die Vorrichtung betreffende Teil der Aufgabe wird bei einer Thermoformmaschine mit einer Füllstation und einer Kontrolleinrichtung, durch die der Füllstatus der Näpfe kontrollierbar ist, durch die kennzeichnenden Merkmale des Anspruchs 6 gelöst.

Diese Vorrichtung, bei der lediglich der Ausleger mit dem Füllkopf verfahren werden muß, um innerhalb des Formatbereiches der Folienbahn den nicht korrekt gefüllten Napf zu erreichen, bietet den Vorteil, daß nur ein relativ kleines Bauteil bewegt werden muß, das dadurch mit relativ geringem Kraftaufwand beschleunigt, also in seiner Bewegungsrichtung oder seinem Geschwindigkeitsbetrag geändert werden kann. Dies ermöglicht es, das Zeitintervall eng zu begrenzen, das benötigt wird, um den am ungünstigsten zu erreichenden Napf zu befüllen. Außerdem erfüllt diese Vorrichtung die Randbedingung, so wenig Raum zu beanspruchen, daß diese in bestehende Thermoformmaschinen nachgerüstet werden kann, wo in der Regel nach der Kontrolleinrichtung ein Freiraum von der Ausdehnung eines Formatbereiches frei gelassen ist und dafür ausgenutzt werden kann.

Hinsichtlich des Platzbedarfes ist es günstig, wenn die Kontrolleinrichtung durch eine Zeilenkamera gebildet ist, und wenn zwischen deren Signalausgang und der eine Steuerung aufweisenden Nachfülleinheit ein Analog/Digital- Konverter angeordnet ist.

Wenn die Kontrolleinrichtung durch ein Ganzbildkamerasystem gebildet ist, durch das alle Näpfe eines Formatbereichs der Folienbahn simultan erfaßbar sind, und wenn die Nachfülleinheit eine Steuerung zur Auswertung der von dem Ganzbildkamerasystem aufgenommenen Information aufweist, ergibt sich der Vorteil, daß nicht einzelne Zeilen von Näpfen eines Formatbereiches abgetastet und zu einem Gesamtbild zusammengesetzt werden müssen. Das mit der Ganzbildkamera aufgenommene Bild wird einheitlich für den gesamten Formatbereich ausgewertet.

Im Rahmen der Erfindung ist weiterhin vorgesehen, daß die Ladeeinrichtung ein Füllgutreservoir und einen Füllschuh mit einem das Füllgut führenden Kanal aufweist, der auf der dem Füllkopf zugewandten Seite derartig geführt ist, daß dieser einen kleinen Winkel mit der Unterseite des Füllschuhs einschließt, so daß das Füllgut tangential in die Bohrung des Füllkopfes gleiten kann. Für einen zufriedenstellenden Betrieb der Nachfülleinheit, bei dem in kurzer Zeit möglichst viele nicht korrekt gefüllte Näpfe befüllt werden können, ist es wesentlich, daß das Füllgut auch in den Füllkopf schnell und ohne diesen zu verstopfen eingefüllt werden kann. Dies wird bei dem Füllgut mit fest vorgegebener äußerer Form dadurch erreicht, daß es am Ende des Kanal in einer Lage ankommt, in der es durch einen relativ kurzen Fallweg ohne Verdrehungen, durch die es innerhalb der Öffnung des Füllkopfes verkanten könnte, in den Füllkopf überführt wird.

Damit das Füllgut einzeln und gezielt in die Öffnung des Füllkopfes eingeführt werden kann, ist es vorgesehen, daß in den Kanal zwei dessen Querschnitt verengende, bewegliche Stifte ragen, die einzeln aus dem Kanal entfernbar sind. Ist das Ende des Kanals durch einen unterhalb des Füllschuhs angeordneten Schieber verschließbar, so kann auf dem Schieber stets eine Einheit des Füllgutes, beispielsweise eine Tablette bereit gehalten werden, so daß diese schnell und in der richtigen Lage in den Füllkopf überführt werden kann.

Damit mit einer Thermoformmaschine Füllgut der verschiedensten Art und damit auch der verschiedensten Formate abgepackt werden kann, ist es notwendig, die einzelnen Bestandteile der Thermoformmaschine an das Format des zu verpackenden Füllguts anpassen zu können. In diesem Zusammenhang ist es vorteilhaft, wenn der Füllkopf lösbar mit dem Ausleger verbunden ist, da dann dies das einzige Teil ist, das bei der erfindungsgemäßen Vorrichtung bei einem Formatwechsel ausgewechselt werden muß.

Im Rahmen der Erfindung ist vorgesehen, daß die Aufnahme durch eine von oben befüllbare Bohrung gebildet ist, die durch einen axial verschieblichen Kolben verschließbar ist. Bei dieser Ausführungsform wird in einfacher Weise das Füllgut von oben in die Bohrung eingefüllt und dort durch den Kolben zurückgehalten, bis der Füllkopf über einen nachzufüllenden Napf positioniert ist und das Füllgut nach dem Zurückziehen des Kolbens die Bohrung nach unten hin wieder verlassen kann, das Füllgut also stets nur unter dem Einfluß der Schwerkraft geradlinig bewegt wird.

Es kann in seltenen Fällen vorkommen, daß innerhalb eines Formatbereiches nicht nur ein Napf nicht korrekt gefüllt ist, so daß dann die Zeit nicht ausreicht, die Ausleger mehrmals in die Position zum Beladen des Füllkopfes zu verfahren und diesen daraufhin über dem nachzufüllenden Napf zu positionieren. In solchen Fällen ist es vorteilhaft, wenn der Füllkopf in der Aufnahme mindestens zwei Füllguteinheiten aufnehmen kann, die jeweils durch einen axial verschieblichen Kolben getrennt gelagert sind. Dadurch kann dann der Füllkopf auf kürzestem Wege zwischen zwei nicht korrekt gefüllten Näpfen innerhalb des Formatbereiches verfahren werden.

Eine alternative Ausführungsform ist dadurch gekennzeichnet, daß der Füllkopf um seine Längsachse drehbar am Ausleger gelagert und zwischen einer Position mit nach oben weisender Aufnahme und nach unten weisender Aufnahme verstellbar ist. Bei dieser Ausführungsform ist aufgrund der Drehbewegung eine Änderung der Höhenlage der Aufnahme um dem Durchmesser des Füllkopfes gegeben, so daß ohne eine Höhenverstellung die Aufnahme stets in eine für die Übernahme des Füllgutes bzw die Abgabe an den nachzufüllenden Napf günstige Lage dicht am Füllschuh bzw der Folie verstellt wird.

Vorteilhaft ist dabei weiterhin, wenn an der Aufnahme eine Unterdruckleitung angeschlossen ist. Auf bewegliche Teile, durch die die Aufnahme verschlossen wird, kann dadurch verzichtet werden und nach erfolgter Positionierung des Füllkopfes über den nachzufüllenden Napf kann schneller die Nachfüllung erfolgen.

Wiederum um gegebenenfalls innerhalb kurzer Zeit mehrere Näpfe nachfüllen zu können, sind mehrere der Aufnahmen mit jeweils eigener Unterdruckleitung vorgesehen.

Der Ausleger ist in der Höhe verfahrbar, damit dieser zwischen Positionen verfahren werden kann, in denen die Fallwege des Füllgutes zwischen dem Ende des Kanals des Füllschuhs bzw. durch die Bohrung des Füllkopfes in den Napf fallen kann, so daß das lagerichtige Einfüllen des Füllgutes ohne Verkantungen gewährleistet ist.

Der Nachfülleinheit ist eine zweite Kontrolleinrichtung, die gleichartig zu der ersten ausgebildet sein, nachgeordnet.

Im folgenden soll die erfindungsgemäße Vorrichtung an einem in der Zeichnung dargestellten Ausführungsbeispiel näher erläutert werden; es zeigen:

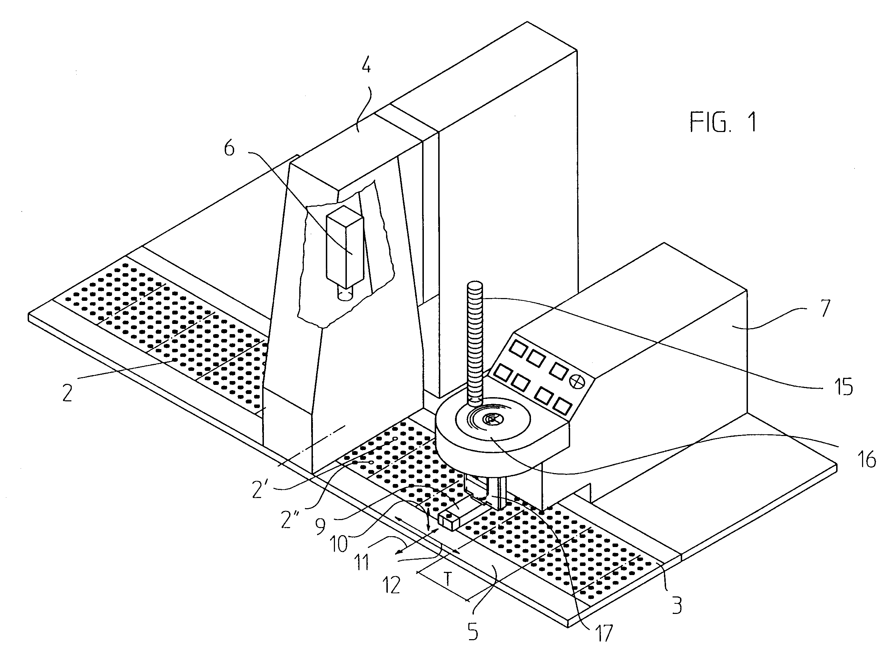

- Fig. 1: eine schematische Darstellung des die Kontrolleinrichtung und die Nachfülleinheit umfassenden Teils einer Thermoformmaschine,
- Fig. 2: den dem Ende des Auslegers angenäherten, gebrochen dargestellten Füllkopf mit als Bohrung ausgeführter Aufnahme,
- Fig. 2a: eine der Fig. 2 entsprechende Darstellung mit dem um seine Längsachse drehbaren Füllkopf, und

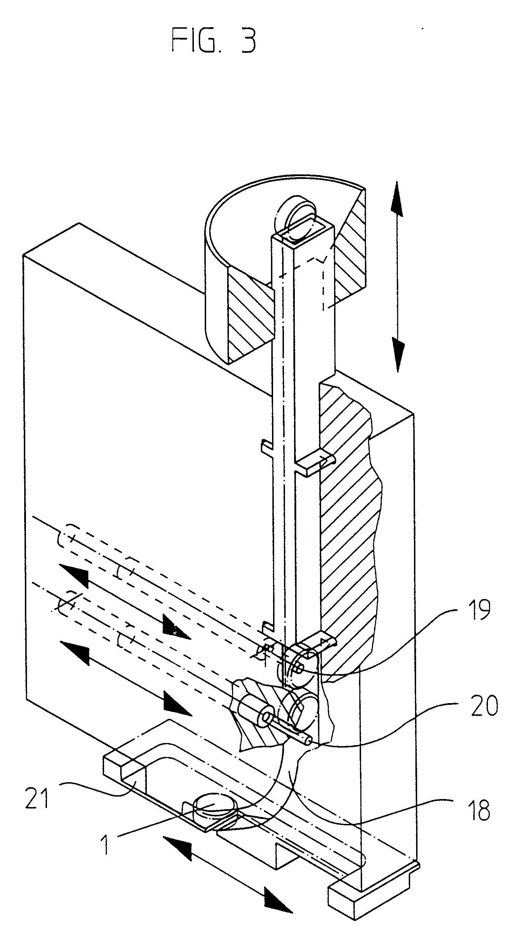

- Fig. 3: eine schematische Darstellung der Ladeeinrichtung mit dem den Kanal aufweisenden Füllschuh.

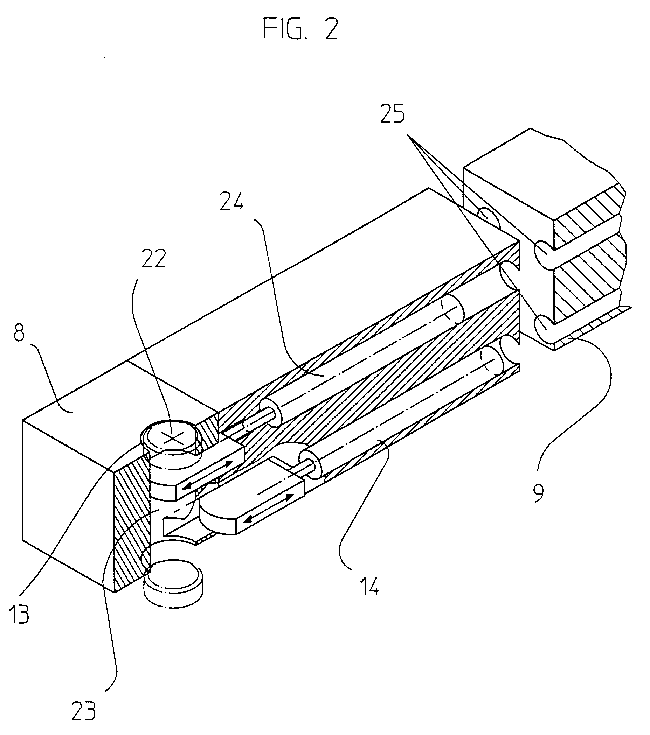

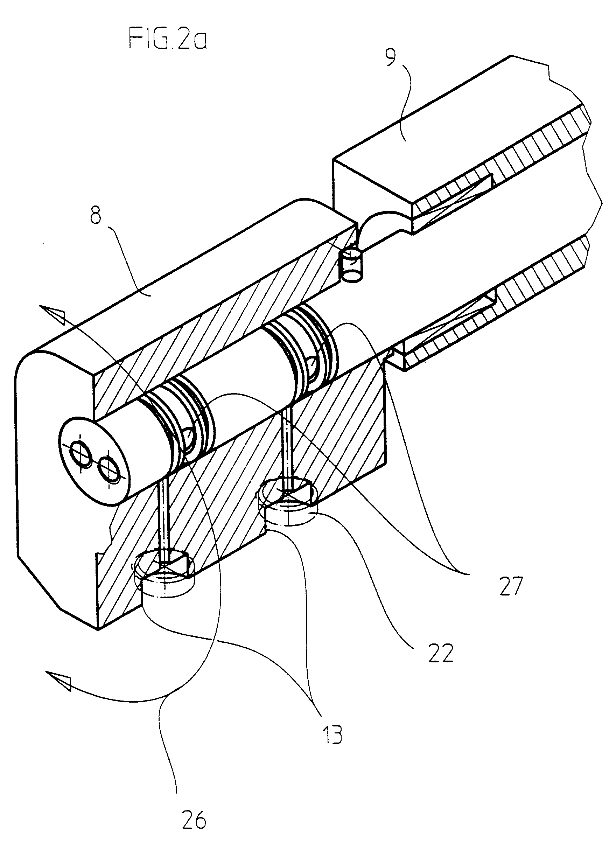

Die erfindungsgemäße Vorrichtung dient zum Nachfüllen von Füllgut 1 in Näpfe 2, die mittels einer im einzelnen nicht dargestellten Thermoformmaschine in einer Folienbahn 3 erzeugt und die in der Füllstation der Thermoformmaschine nicht korrekt gefüllt worden sind. Die Vorrichtung umfaßt eine Kontrolleinrichtung 4 zum Überprüfen des Füllstatus der Näpfe 2, die die Füllstation verlassen haben und die innerhalb eines Formatbereichs 5 der Folienbahn 3 angeordnet sind. In dem in der Zeichnung dargestellten Ausführungsbeispiel ist die Kontrolleinrichtung 4 durch eine optische Füllkontrolle gebildet, die eine Ganzbildkamera 6 umfaßt, die alle Näpfe 2 eines Formatbereichs 5 der Folienbahn 3 simultan kontrolliert. Die Vorrichtung umfaßt weiterhin eine Nachfülleinheit 7, die in Laufrichtung der Folienbahn 3 nach der Kontrolleinrichtung 4 angeordnet ist. Diese Nachfülleinheit 7 umfaßt einen Füllkopf 8, der am Ende eines Auslegers 9 angeordnet ist, der in der Höhe und in einer zur Folienbahn 3 parallelen Ebene entsprechend den Pfeilen 10-12 verstellbar ist. Der Füllkopf 8 weist eine Aufnahme 13 auf, die in der in Fig. 2 dargestellten Ausführungsform durch eine Bohrung gebildet ist, die durch einen Kolben 14 auf der der Folienbahn 3 zugewandten Seite geöffnet und verschlossen werden kann. Fig. 2a zeigt eine Ausführungsform, bei der der Füllkopf 8 um seine Längsachse entsprechend dem Pfeil 26 drehbar am Ausleger 9 gelagert ist, so daß die Aufnahmen 13 je nach Stellung des Füllkopfes 8 nach oben oder nach unten weisen. Das Füllgut wird durch Unterdruck in den Aufnahmen 13 gehalten.

Der Ausleger 9 kann in eine erste Position verfahren werden, in der der Füllkopf 8 sich unterhalb einer Ladeeinrichtung befindet, die ein durch eine Zuführung 15 gespeistes Füllgutreservoir 16 aufweist. Weiterhin umfaßt die Ladeeinrichtung einen Füllschuh 17, in dem ein das Füllgut führender Kanal 18 angeordnet ist, der innerhalb des Füllschuhs 17 derartig geführt ist, daß auf der dem Füllkopf 8 zugewandten Seite der Kanal 18 einen kleinen Winkel mit der Unterseite des Füllschuhs 17 einschließt. In den Kanal 18 ragen zwei dessen Querschnitt verengende Stifte 19,20, die axial verschiebbar sind und zur Vereinzelung des Füllguts 1 benutzt werden können, indem diese nacheinander aus dem Querschnitt des Kanals 18 entfernt werden und so das Füllgut 1 einzeln auf das Ende des Kanals 18 zu rutschen lassen. An diesem Ende ist unterhalb des Füllschuhs 17 ein Schieber 21 angeordnet, der zum Öffnen und Schließen des Kanals 18 dient. Der an dem Ende des Auslegers 9 angeordnete Füllkopf 8 weist in der in der Fig. 2 dargestellten Ausführungsform zwei Kammern 22, 23 auf, in denen Füllgut 1 eingebracht werden kann. Diese Kammern 22,23 sind durch einen axial verschieblichen Kolben 24 getrennt (Leitungen 25).

Mit dieser Vorrichtung wird das nachfolgend beschriebene Verfahren des Befüllvorgangs ausgeführt. Zunächst wird der für das Füllgut 1 passende Füllkopf 8 an dem Ende des Auslegers 9 befestigt und der Ausleger 9 sodann mit dem Füllkopf 8 in eine erste Position verfahren, in der sich der Füllkopf 8 mit der Bohrung unterhalb des Endes des Kanals 18 des Füllschuhs 17 befindet. Die Bohrung des Füllkopfes 8 ist mit den Kolben 14 und 24 verschlossen. Beim Öffnen des Schiebers 21 fällt ein erstes Produkt 22 zur Reduktion der Fallhöhe zunächst auf den Schieber des Kolbens 24, dessen Abstand zur Oberkante des Füllkopfes 8 ungefähr einer Dicke des Produktes 22 entspricht. Der Schieber 21 wird wieder geschlossen. Durch Zurückziehen des Schiebers 24 wird das Produkt 22 auf dem Schieber des Kolbens 14 abgelegt. Der Abstand zwischen Kolben 24 und 14 entspricht ungefähr einer Dicke des Produkts 22. Daraufhin wird im Füllkopf 8 der Kolben 24 vorgefahren und dieser für die Aufnahme einer weiteren Portion Füllgut 1 vorbereitet. Der Schieber 21 unterhalb des Füllschuhs 17 verschließt wieder das Ende des Kanals 18; der oben liegende Stift 19 wird aus dem Querschnitt des Kanals 18 zurückgezogen, so daß Füllgut 1 bis zu dem darunter liegenden Stift 20 durchrutschen kann. Daraufhin wird der oben liegende Stift 20 wieder in den Querschnitt des Kanals 18 hereingefahren und der unten liegende Stift 20 zurückgezogen, woraufhin die Tablette 1 durch den Kanal 18 rutscht und durch dessen Führung innerhalb des Füllschuhs 17 unten tangential auf den Schieber 21 gleitet, der dahin erneut öffnet und die Tablette 1 auf den Kolben 24 in der Bohrung 13 des Füllkopfes 8 fallen läßt. Die Vorbereitung des Füllkopfes 8 ist damit abgeschlossen.

Die Vorbereitung des Füllkopfes gemäß Fig. 2a erfolgt, indem die Aufnahme 13 entsprechend dem Pfeil 26 nach oben gedreht wird, wo dann unmittelbar die Tablette 1 in die Aufnahme 13 aus dem Füllschuh 17 eingefüllt werden kann. Die Aufnahme 13 ist an einer Unterdruckleitung 27 angeschlossen, durch die die Tablette 1 in der Aufnahme 13 gehalten wird, auch wenn der Füllkopf 8 so gedreht wird, daß die Aufnahme 13 nach unten weist. Durch kurzfristiges Abschalten des Unterdrucks wird die Tablette 1 aus der Aufnahme 13 freigegeben.

Die Kontrolleinrichtung 4 überprüft, ob innerhalb eines Formatbereiches 5 zuvor in der Füllstation ein Napf 2 nicht korrekt befüllt worden ist. Registriert die Kontrolleinrichtung einen derartigen Napf 2', so wird zugleich dessen relative Lage innerhalb des Formatbereiches 5 der Folienbahn 3 erfaßt und an die Steuerung der Nachfülleinheit 7 übermittelt. Diese verfährt daraufhin den Ausleger 9 mit dem Füllkopf 8 zu der Position, in der der registrierte Napf 2' erwartet wird. Dabei kann die Nachfülleinheit 7 auf zweierlei Wegen verfahren. Zum einen besteht die Möglichkeit, bei Vorschub der Folienbahn 3 den Füllkopf 8 synchron mit dem registrierten Napf 2' zu bewegen, so daß zwischen Napf 2' und der Bohrung 13 des Füllkopfes 8 keine Relativbewegung stattfindet und die Tablette 1 aus dem Füllkopf 8 in den Napf 2' fallen kann. Zum anderen besteht bei getakteten Thermoformmaschinen zusätzlich die Möglichkeit, bei Stillstand der Folienbahn 3 den registrierten Napf 2' zu befüllen, nachdem der Füllkopf 8 zuvor an die dafür benötigte Position verfahren worden ist.

Sollten innerhalb des einen Formatbereichs 5 zwei Näpfe 2' registriert werden, die nicht korrekt in der Füllstation befüllt worden sind, verfährt der Füllkopf 8 noch zu der Position des zweiten Napfes 2'' und befüllt auch diesen. Es hängt im Einzelfall von den konkreten Gegebenheiten ab, ob die Zeit ausreicht um weitere Näpfe 2' zu befüllen, was prinzipiell im Rahmen der Erfindung möglich ist. Nach dem Beladen der Näpfe 2', 2'' fährt der Ausleger 9 mit dem Füllkopf 8 zurück in die erste Position, in der der Füllkopf 8 wieder beladen werden kann.

Nachfolgend wird noch mit einer zweiten Kontrolleinrichtung überprüft, ob nunmehr sämtliche Näpfe 2 innerhalb eines Formatbereiches 5 korrekt gefüllt sind.

## Patentansprüche

1. Verfahren zum Nachfüllen von Füllgut (1) in mittels einer Thermoformmaschine in einer Folienbahn (3) erzeugte Näpfe (2), die in der Füllstation der Thermoformmaschine nicht korrekt gefüllt worden sind, bei dem nach dem Füllvorgang in der Füllstation der Füllstatus jedes einzelnen Napfes (2) kontrolliert und ein nicht korrekt gefüllter Napf (2') registriert wird, wobei in einer Nachfülleinheit (7) ein Füllkopf (8) mit dem Füllgut (1) befüllt wird, die Information über die Lage des nicht korrekt gefüllten, registrierten Napfes (2') auf der Folienbahn (3) erfaßt und an die Nachfülleinheit (7) übermittelt wird, daß der an einem in einer zur Folienbahn (3) parallelen Ebene verfahrbaren Ausleger (9) angeordnete Füllkopf (8) oberhalb des registrierten Napfes (2') positioniert und das Füllgut (1) direkt in diesen Napf (2') eingefüllt wird.

2. Verfahren nach Anspruch 1, dadurch gekennzeichnet, daß mit einer Kontrolleinrichtung (4) der Füllstatus der Näpfe (2) kontrolliert und die Lage des registrierten Napfes (2') erfaßt wird, und daß das Signal der optischen Füllkontrolle (6) an die Nachfülleinheit (7) übermittelt wird.

3. Verfahren nach Anspruch 1 oder 2, dadurch gekennzeichnet, daß der Füllkopf (8) in seiner Position oberhalb des registrierten Napfes (2') zum Befüllen synchron mit der Folienbahn (3) bewegt wird.

4. Verfahren nach Anspruch 1 oder 2, dadurch gekennzeichnet, daß der Füllkopf (8) nach Erreichen seiner Position oberhalb des registrierten Napfes (2') zum Befüllen stationär über der ruhenden Folienbahn (3) verharrt.

5. Verfahren nach einem der Ansprüche 1 bis 4, dadurch gekennzeichnet, daß nach der Nachfülleinheit (7) erneut der Füllstatus des in der Füllstation nicht korrekt gefüllten Napfes (2') kontrolliert wird.

6. Vorrichtung zur Durchführung eines der Verfahren nach einem der Ansprüche 1 bis 5 bei einer Thermoformmaschine mit einer Füllstation, mit einer Kontrolleinrichtung (4), durch die der Füllstatus der Näpfe (2) kontrollierbar ist, dadurch gekennzeichnet, daß durch die Kontrolleinrichtung (4)ein nicht korrekt gefüllter Napf (2') registrierbar und dessen Lage ermittelbar ist, daß eine einen Ausleger (9) mit einem Füllkopf (8) aufweisende Nachfülleinheit (7) vorgesehen ist, daß eine Aufnahme (13) des Füllkopfs (8) in einer ersten Position des Auslegers (9) mittels einer Ladeeinrichtung mit dem Füllgut (1) beladbar ist, der Füllkopf (8) in einer zur Folienbahn (3) parallelen Ebene verfahrbar und mittels von der Kontrolleinrichtung (4) erhältlicher Informationen über den von ihr registrierten Napf (2') positionierbar ist, und daß das Füllgut (1) aus der Aufnahme (13) in den registrierten Napf (2') einfüllbar ist.

7. Vorrichtung nach Anspruch 6, dadurch gekennzeichnet, daß die Kontrolleinrichtung (4) durch eine Zeilenkamera gebildet ist, und daß zwischen deren Signalausgang und der eine Steuerung aufweisenden Nachfülleinheit (7) ein Analog/Digital-Konverter angeordnet ist.

8. Vorrichtung nach Anspruch 6, dadurch gekennzeichnet, daß die Kontrolleinrichtung (4) durch ein Ganzbildkamerasystem (6) gebildet ist, durch das alle Näpfe (2) eines Formatbereichs (5) der Folienbahn (3) simultan erfaßbar sind, und daß die Nachfülleinheit (7) eine Steuerung zur Auswertung der von dem Ganzbildkamerasystem (6) aufgenommenen Information aufweist.

9. Vorrichtung nach einem der Ansprüche 6 bis 8, dadurch gekennzeichnet, daß die Ladeeinrichtung ein Füllgutreservoir (16) und einen Füllschuh (17) mit einem das Füllgut (1) führenden Kanal (18) aufweist, der auf der dem Füllkopf (8) zugewandten Seite derartig geführt ist, daß dieser einen kleinen Winkel mit der Unterseite des Füllschuhs (17) einschließt, so daß das Füllgut (1) tangential in die Aufnahme (13) des Füllkopfes (8) gleiten kann.

10. Vorrichtung nach Anspruch 9, dadurch gekennzeichnet, daß in den Kanal (18) übereinander zwei dessen Querschnitt verengende, bewegliche Stifte (19, 20) ragen, die einzeln aus dem Kanal (18) entfernbar sind.

11. Vorrichtung nach Anspruch 9 oder 10, dadurch gekennzeichnet, daß das Ende des Kanals (18) durch einen unterhalb des Füllschuhs (17) angeordneten Schieber (21) verschließbar ist.

12. Vorrichtung nach einem der Ansprüche 6 bis 11, dadurch gekennzeichnet, daß der Füllkopf (8) lösbar mit dem Ausleger (9) verbunden ist.

13. Vorrichtung nach einem der Ansprüche 6 bis 12, dadurch gekennzeichnet, daß die Aufnahme (13) durch eine von oben befüllbare Bohrung gebildet ist, die durch einen axial verschieblichen Kolben (24) verschließbar ist.

14. Vorrichtung nach Anspruch 13, dadurch gekennzeichnet, daß der Füllkopf (8) in der Aufnahme (13) mindestens zwei Füllguteinheiten aufnehmen kann, die jeweils durch einen der axial verschieblichen Kolben (24) getrennt gelagert sind.

15. Vorrichtung nach einem der Ansprüche 6 bis 12, dadurch gekennzeichnet, daß der Füllkopf (8) um seine Längsachse drehbar am Ausleger (9) gelagert und zwischen einer Position mit nach oben weisender Aufnahme (13) und nach unten weisender Aufnahme (13) verstellbar ist.

16. Vorrichtung nach Anspruch 15, dadurch gekennzeichnet, daß an der Aufnahme (13) eine Unterdruckleitung (27) angeschlossen ist.

17. Vorrichtung nach Anspruch 16, dadurch gekennzeichnet, daß mehrere der Aufnahmen (13) mit jeweils eigener Unterdruckleitung (27) vorgesehen sind.

18. Vorrichtung nach einem der Ansprüche 6 bis 17, dadurch gekennzeichnet, daß der Ausleger (9) in der Höhe verfahrbar ist.

19. Vorrichtung nach einem der Ansprüche 6 bis 18, dadurch gekennzeichnet, daß der Nachfülleinheit (7) eine zweite Kontrolleinrichtung nachgeordnet ist.

## Claims

1. A method of subsequently introducing filling material (1) into cups (2) which are produced by means of a thermoforming machine in a foil web (3) and which were not correctly filled in the filling station of the thermoforming machine, in which after the filling operation in the filling station the filling status of each individual cup (2) is checked and a cup (2') which has not been correctly filled is registered, wherein in a post-filling unit (7) a filling head (8) is filled with the filling material (1), the information about the position of the registered cup (2'), which has not been correctly filled, on the foil web (3) is acquired and communicated to the post-filling unit (7), the filling head (8) arranged on an arm (9) displaceable in a plane parallel to the foil web (3) is positioned above the registered cup (2') and the filling material (1) is introduced directly into said cup (2').

2. A method according to claim 1 characterised in that the filling status of the cups (2) is checked and the position of the registered cup (2') is acquired with a checking device (4) and that the signal of the optical filling checking means (6) is communicated to the post-filling unit (7).

3. A method according to claim 1 or claim 2 characterised in that the filling head (8) is moved in its position above the registered cup (2') for the filling operation synchronously with the foil web (3).

4. A method according to claim 1 or claim 2 characterised in that after reaching its position above the registered cup (2') the filling head (8) stops stationarily above the foil web (3) which is at rest, for the filling operation.

5. A method according to one of claims 1 to 4 characterised in that downstream of the post-filling unit (7) the filling status of the cup (2') which was not correctly filled in the filling station is checked again.

6. Apparatus for carrying out one of the methods according to one of claims 1 to 5 in a thermoforming machine having a filling station, a checking device (4) by which the filling status of the cups (2) can be checked, characterised in that a cup (2') which has not been correctly filled can be registered and its position ascertained by the checking device (4), there is provided a post-filling unit (7) having an arm (9) with a filling head (8), a receiving means (13) of the filling head (8) can be loaded with the filling material (1) by means of a loading device in a first position of the arm (9), the filling head (8) is movable in a plane parallel to the foil web (3) and can be positioned over the cup (2') registered by the checking device (4) by means of information which can be obtained from the checking device (4), and the filling material (1) can be introduced into the registered cup (2') from the receiving means (13).

7. Apparatus according to claim 6 characterised in that the checking device (6) is formed by a line camera and an analog/digital converter is arranged between the signal output of the camera and the post-filling unit (7) which has a control means.

8. Apparatus according to claim 6 characterised in that the checking device (4) is formed by a full-image camera system (6) by which all cups (2) of a format region (5) of the foil web (3) can be simultaneously detected, and the post-filling unit (7) has a control means for evaluation of the information recorded by the full-image camera system (6).

9. Apparatus according to one of claims 6 to 8 characterised in that the loading device has a filling material reservoir (16) and a filling shoe (17) with a conduit (18) which guides the filling material (1) and which is guided on the side towards the filling head (8) in such a way that it includes a small angle with the underside of the filling shoe (17) so that the filling material (1) can slide tangentially into the receiving means (13) of the filling head (8).

10. Apparatus according to claim 9 characterised in that projecting into the conduit (18) in superposed relationship are two movable pins (19, 20) which restrict the cross-section of the conduit and which can be individually removed from the conduit (18).

11. Apparatus according to claim 9 or claim 10 characterised in that the end of the conduit (18) is closable by a slider (21) arranged beneath the filling shoe (17).

12. Apparatus according to one of claims 6 to 11 characterised in that the filling head (8) is releasably connected to the arm (9).

13. Apparatus according to one of claims 6 to 12 characterised in that the receiving means (13) is formed by a bore which can be filled from above and which is closable by an axially displaceable piston (24).

14. Apparatus according to claim 13 characterised in that the filling head (8) can receive in the receiving means (13) at least two filling material units which are each supported separately by a respective one of the axially displaceable pistons (24).

15. Apparatus according to one of claims 6 to 12 characterised in that the filling head (8) is mounted on the arm (9) rotatably about its longitudinal axis and is displaceable between a position with a receiving means (13) facing upwardly and a receiving means (13) facing downwardly.

16. Apparatus according to claim 15 characterised in that a reduced-pressure conduit (27) is connected to the receiving means (13).

17. Apparatus according to claim 16 characterised in that there is provided a plurality of the receiving means (13) each having its own reduced-pressure conduit (27).

18. Apparatus according to one of claims 6 to 17 characterised in that the arm (9) is displaceable in respect of height.

19. Apparatus according to one of claims 6 to 18 characterised in that arranged downstream of the post-filling unit (7) is a second checking device.

## Revendications

1. Procédé pour compléter le remplissage en produit (1) d'alvéoles (2) fabriquées à l'aide d'une machine de thermoformage dans une bande de film (3), qui n'ont pas été correctement remplies dans le poste de remplissage de la machine de thermoformage, selon lequel on contrôle l'état de remplissage de chaque alvéole (2) après l'opération de remplissage dans le poste de remplissage et on détecte une alvéole (2') qui n'a pas été remplie correctement, une tête de remplissage (8) étant chargée avec le produit de remplissage (1) dans une unité d'appoint de remplissage (7), l'information sur la position de l'alvéole (2') qui n'a pas été remplie correctement, détectée dans la bande de film (3) étant déterminée et transmise à l'unité d'appoint de remplissage (7), la tête de remplissage (8) placée sur un bras (9) mobile dans un plan parallèle à la bande de film (3) étant positionnée au-dessus de l'alvéole (2') détectée et le produit de remplissage (1) étant introduit dans ladite alvéole (2').

2. Procédé selon la revendication 1, caractérisé par le fait que l'on contrôle l'état de remplissage des alvéoles (2) à l'aide d'un dispositif de contrôle (4) et on détermine la position de l'alvéole (2') détectée et par le fait que l'on transmet le signal du contrôle de remplissage optique (6) à l'unité d'appoint de remplissage (7).

3. Procédé selon la revendication 1 ou 2, caractérisé par le fait que la tête de remplissage (8) est déplacée en synchronisme avec la bande de film (3) dans sa position au-dessus de l'alvéole (2') détectée, à des fins de remplissage.

4. Procédé selon la revendication 1 ou 2, caractérisé par le fait que la tête de remplissage (8), une fois atteinte sa position au-dessus de l'alvéole (2') détectée, est immobilisée au-dessus de ladite alvéole (2') détectée, à des fins de remplissage, au-dessus de la bande de film (3) arrêtée.

5. Procédé selon une des revendications 1 à 4, caractérisé par le fait qu'en aval de l'unité d'appoint de remplissage (7), on contrôle de nouveau l'état de remplissage de l'alvéole (2') qui n'a pas été remplie correctement dans le poste de remplissage.

6. Dispositif pour la mise en oeuvre de l'un des procédés selon l'une des revendications 1 à 5 sur une machine de thermoformage avec un poste de remplissage, avec un dispositif de contrôle (4) à l'aide duquel l'état de remplissage des alvéoles (2') peut être contrôlé, caractérisé par le fait qu'une alvéole (2') qui n'a pas été remplie correctement peut être détectée par le dispositif de contrôle (4) et sa position déterminée, qu'une unité d'appoint de remplissage (7) pourvue d'un bras (9) portant une tête de remplissage (8) est prévue, qu'un réceptacle (13) de la tête de remplissage (8) peut être chargé en produit de remplissage (1) à l'aide d'un dispositif de chargement dans une première position du bras (9), que la tête de remplissage (8) peut être déplacée dans un plan parallèle à la bande de film (3) et au moyen d'informations fournies par le dispositif de contrôle (4) peut être positionnée au-dessus de l'alvéole (2') détectée par celle-ci et par le fait que le produit de remplissage (1) peut être transféré du réceptacle (13) dans l'alvéole (2') détectée.

7. Dispositif selon la revendication 6, caractérisé par le fait que le dispositif de contrôle (4) est une caméra ligne à ligne et par le fait qu'un convertisseur analogique/numérique est placé entre la sortie de signal de la caméra et l'unité d'appoint de remplissage (7) pourvue d'une commande.

8. Dispositif selon la revendication 6, caractérisé par le fait que le dispositif de contrôle (4) est une caméra pleine image (6) par laquelle toutes les alvéoles (2) d'une zone de format (5) de la bande de film (3) sont détectées simultanément et par le fait que l'unité d'appoint de remplissage (7) comporte une commande pour le traitement des informations enregistrées par la caméra pleine image (6).

9. Dispositif selon une des revendications 6 à 8, caractérisé par le fait que le dispositif de chargement comporte un réservoir à produit de remplissage (16) et un sabot deremplissage (17) avec uncanal (18) de passage de produit de remplissage (1) qui, du côté tourné vers la tête de remplissage (8), a un tracé tel qu'il forme un angle de faible valeur avec la face inférieure du sabot de remplissage (17), de sorte que le produit de remplissage (1) peut glisser tangentiellement dans le réceptacle (13) de la tête de remplissage (8).

10. Dispositif selon la revendication 9, caractérisé par le fait que deux tiges (19, 20) mobiles font saillie l'une au-dessus de l'autre dans le canal (18) et réduisent sa section, lesquelles tiges peuvent être retirées individuellement du canal (18).

11. Dispositif selon la revendication 9 ou 10, caractérisé par le fait que l'extrémité du canal (18) peut être fermée par un tiroir (21) disposé en-dessous du sabot de remplissage (17).

12. Dispositif selon une des revendications 6 à 11, caractérisé par le fait que la tête de remplissage (8) est liée de manière démontable au bras (9).

13. Dispositif selon une des revendications 6 à 12, caractérisé par le fait que le réceptacle (13) est formé d'un trou remplissable par le dessus qui peut être fermé par un piston (24) coulissant axialement

14. Dispositif selon la revendication 13, caractérisé par le fait que la tête de remplissage (8) peut recevoir dans le réceptacle (13) au moins deux unités de produits de remplissage qui sont stockées séparées chaque fois par un piston (24) coulissant axialement.

15. Dispositif selon une des revendications 6 à 12, caractérisé par le fait que la tête de remplissage (8) est montée sur le bras (9) avec possibilité de rotation autour de son axe longitudinal et peut être déplacée entre une position dans laquelle le réceptacle (13) est tourné vers le haut et une position dans laquelle le réceptacle (13) est tourné vers le bas.

16. Dispositif selon la revendication 15, caractérisé par le fait qu'une conduite de dépression (27) est connectée au réceptacle (13).

17. Dispositif selon la revendication 15, caractérisé par le fait que plusieurs des réceptacles (13) sont pourvus chacun d'une conduite de dépression (27) propre.

18. Dispositif selon une des revendications 6 à 17, caractérisé par le fait que le bras (9) est réglable en hauteur.

19. Dispositif selon une des revendications 6 à 18, caractérisé par le fait qu'un second dispositif de contrôle est disposé en aval de l'unité d'appoint de remplissage (7).
